# EUROPÄISCHE PATENTANMELDUNG

(11) **EP 1 609 399 A1**
(43) Veröffentlichungstag der Anmeldung: **28.12.2005**
(21) Anmeldenummer: 04018218.0
(22) Anmeldetag: 31.07.2004
(51) Int. Cl.: A47J 31/057

(54) **Gerät zum Zubereiten von Getränken durch Aufbrühen**

(30) Priorität: 24.06.2004 CN 04247389 U
(71) Anmelder: Qihui, Chen, Foshan City, Guangdong Province (CN)
(72) Erfinder: Qihui, Chen, Foshan City, Guangdong Province (CN)
(74) Vertreter: Graf, Helmut

(57) **Zusammenfassung**

Bei einem Gerät zur Zubereitung von Getränken durch Aufbrühen, insbesondere Kaffeemaschine mit Wasserkocherfunktion, mit einem Gehäuseteil, auf dem eine Abstellfläche oder -platte zum Abstellen eines Gefäßes zur Aufnahme des Getränks vorgesehen ist, sowie mit wenigstens einem Tragelement für eine an dem Filter oberhalb der Platte führenden Dampfleitung ist eine Standfläche am Gehäuseteil zum Abstellen einer mit einer elektrischen Heizung versehenen und über eine Schalteinheit steuerbare Wasserkanne vorgesehen. Der Boden der Wasserkanne weist ein wasserführendes Kupplungs- und Verbindungselement oder Ventilelement auf, welches mit einem an der Standfläche für die Kanne vorgesehenen geräteseitigen Kupplungs-und Verbindungselement oder Rücklaufventil verbindbar ist, das seinerseits über eine Leitung für flüssiges Heißwasser mit der wenigstens einen Dampfleitung bzw. mit der elektrischen Heizeinrichtung der Abstellfläche oder-platte für das Gefäß in Verbindung steht.

## Beschreibung

Die Erfindung bezieht sich auf ein elektrisches Gerät zum Zubereiten von Getränken durch Aufbrühen und dabei speziell auf ein Gerät zum Zubereiten von Kaffee (Kaffeemaschine) gemäß Oberbegriff Patentanspruch 1.

Elektrische Geräte zum Zubereiten von Getränken durch Aufbrühen, insbesondere Kaffeemaschinen sind in verschiedensten Ausführungen bekannt, speziell auch als sogenannte "Dampftropfgeräte", bei Wasser durch Erhitzen verdampft und der Dampf anschließend vor oder beim Eintritt in ein Filter derart abgekühlt wird, dass das wieder kondensierte, heiße Wasser in das jeweilige Filter tropft. Derartige Kaffeemaschinen bestehen grundsätzlich aus einem unteren Gehäuseteil mit einer elektrisch beheizbaren Abstellplatte zum Abstellen einer Kaffeekanne oder eines Bechers sowie aus einem in einem Gehäuseteil gebildeten Wasserbehälter. Letzterer ist über eine Flüssigkeitsleitung mit einem elektrischen Heizelement oder Verdampfer unterhalb der Abstellplatte verbunden. An den Verdampfer ist eine an das Filter oberhalb der Abstellplatte führende Dampfleitung angeschlossen.

Diese bekannten Geräte weisen verschiedene Nachteile auf, so u. a. den Nachteil, dass sie nur eine einzige Funktion, nämlich die Zubereitung eines Getränks durch Aufbrühen haben. Der Wasserbehälter bildet eine Einheit mit dem gesamten Gerät bzw. mit dem Gerätegehäuse, was u.a. eine Reinigung zumindest erschwert.

Aufgabe der Erfindung ist es ein Gerät aufzuzeigen, welches die sogenannten Nachteile vermeidet und vielseitig verwendbar ist. Zur Lösung dieser Aufgabe ist ein Gerät entsprechend dem Patentanspruch 1 ausgebildet.

Das erfindungsgemäße Gerät ist ein Gerät zum Zubereiten von Getränken durch Aufbrühen, d. h. beispielsweise eine Kaffeemaschine, aber mit zusätzlicher Wasserkocherfunktion. Bei dem erfindungsgemäßen Gerät ist auf dem unteren Gehäuseteil eine weitere Abstellfläche, beispielsweise eine zusätzliche Abstellplatte vorgesehen, auf der die elektrisch beheizbare Wasserkanne abnehmbar angeordnet ist. Am Gehäuseteil oder an der zusätzlichen Abstellplatte oder aber auch an der Wasserkanne ist wenigstens ein Schalter vorgesehen, mit der das Gerät und dessen Funktionen steuerbar sind, und zwar u. a. für ein Ein- und Ausschalten des Gerätes sowie für das Umschalten zwischen der Aufbrühfunktion, d. h. der Funktion zum Zubereiten eines Getränks durch Aufbrühen und der reinen Wasserkocherfunktion.

Im Boden der Wasserkanne ist ein wasserführendes Anschluss- oder Kupplungselement mit Ventilfunktion vorgesehen, welches beim Herausnehmen der Wasserkanne ein Auslaufen von Wasser verhindert. Das Anschluss- oder Kupplungselement der Wasserkanne kann mit einem passenden Anschluss- oder Kupplungselement des Gerätes verbunden werden. Dieses geräteseitige Anschluss- oder Kupplungselement hat dann z. B. die Funktion eines Rückschlagventils und ist über eine Leitung für heißes Wasser mit einem unter der Standfläche oder Abstellplatte für den Kaffee- oder Teebehälter vorgesehenen elektrischen Verdampfer verbunden. Durch die Rückschlagventilfunktion des geräteseitigen Anschluss- oder Kupplungselementes ist ein Wasserrücklauf aus dem Gehäuseteil bzw. aus der dortigen Leitung beim Abnehmen der Wasserkanne verhindert. Bei einer bevorzugten Ausführungsform der Erfindung befindet sich das gehäuseseitige Anschlusselement oberhalb der Oberseite des Gehäuseteils, während die Leitungen im Inneren des Gehäuses aufgenommen sind.

Die Wasserkanne ist im Boden oder in der Nähe des Bodens mit einem elektrischen Heizelement und einem zugehörigen Temperaturregler versehen. Über eine Stecker-Buchsen-Verbindung ist dann der Heizkörper mit dem Temperaturregler an eine gehäuseseitige Schalt- und Versorgungseinheit angeschlossen, die im einfachsten Fall aus wenigstens einem Schalter und einer Verbindung zum Anschluss an die allgemeine Netzspannung besteht. Über den Schalter können dann u. a. ein Ein- und Ausschalten des Gerätes sowie eine individuelle Steuerung der Aufbrüh- und Wasserkochfunktion erfolgen.

Die Vorteile der Erfindung bestehen darin, dass die Wasserkanne abnehmbar ist, wodurch auch Reinigungs- und Wartungsarbeiten erleichtert werden.

Bei einer bevorzugten Ausführungsform ist die Standfläche für die abnehmbare Wasserkanne von einer weiteren Abstellplatte gebildet, an der dann das gehäuseseitige, wasserführende Anschlusselement sowie auch die gehäuseseitigen Element der Stecker-Buchsen-Verbindung vorgesehen sind. An der Platte bzw. in einem diese Platte bildenden Gehäuse ist ferner der wenigstens eine Schalter zum Steuern des Gerätes untergebracht, gegebenenfalls auch mit einer optischen Anzeige, die den jeweiligen Status des Gerätes anzeigt.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: die Konstruktion einer Vorrichtung gemäß der Erfindung, teilweise im Schnitt;
- Fig. 2: in einer Darstellung wie Figur 1 eine weitere mögliche Ausführungsform, bei der der Schalter zur Steuerung der Funktion der Vorrichtung an der Wasserkanne vorgesehen ist.

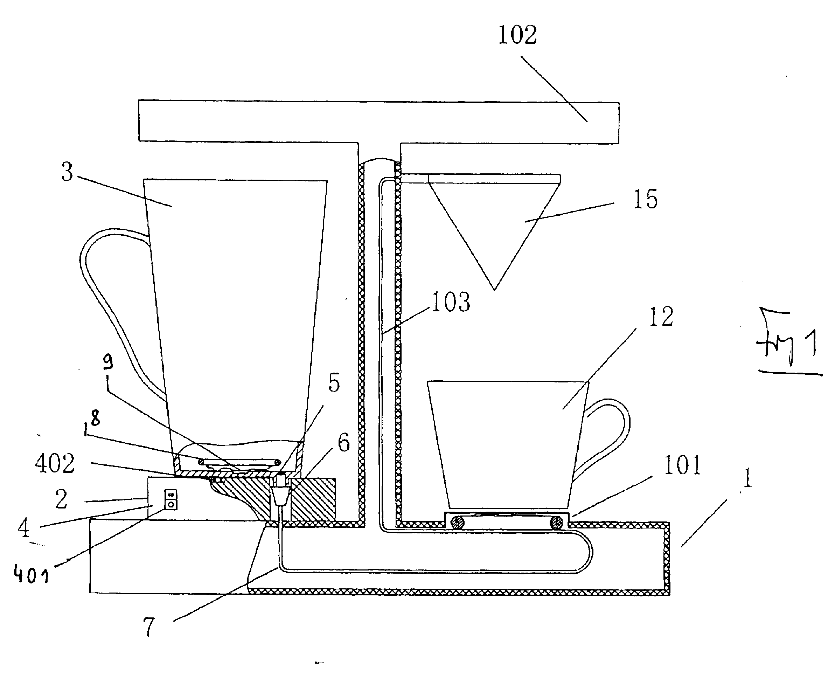

Die in der Figur 1 dargestellte Vorrichtung dient zum Aufbrühen von Getränken, beispielsweise zur Zubereitung von Kaffee und hat zugleich auch eine Wasserkocherfunktion.

Auf der Oberseite eines unteren Gehäuseteils 1 ist eine elektrisch beheizbare Abstellplatte 101 vorgesehen. Weiterhin ist das Gehäuseteil 1 mit einem über die Oberseite dieses Gehäuseteils vorstehenden Tragelement 102 ausgebildet, welches u. a. als Tragelement für eine in einem Hohlraum des Tragelementes aufgenommene Dampfleitung 103 dient. Auf dem Gehäuseteil 1 ist weiterhin eine Abstellplatte oderkonsole 2 vorgesehen, die u. a. eine Standfläche für eine abnehmbare Wasserkanne 3 bildet. in der Abstellplatte 2 befindet sich eine elektrischer Schalt- oder Steuereinrichtung 4, mit der ein Ein- und Ausschalten der Vorrichtung bzw. ein Umschalten zwischen einer reinen Wasserkocherfunktion und der Brühfunktion bzw. der Funktion als Maschine zum Zubereiten von Kaffee oder Tee möglich ist, und zwar mit einem dortigen Schalter 401.

Im Boden der Wasserkanne ist ein Anschluss- oder Kupplungsstück bzw. Ventil 5 integriert, welches beim Abnehmen der Wasserkanne von der Platte 2 sperrt und dadurch ein Austreten von Wasser aus der Wasserkanne 3 verhindert. Das Ventil 5 ist bei auf die Platte 2 aufgesetzter Wasserkammer an ein geräteseitiges Anschluss- oder Kupplungsstück bzw. Rückschlagventil 6 angeschlossen, d. h. das Ventilelement 5 und das Rückschlagventil 6 bilden eine lösbare Kupplung zum Verbinden des Innenraums der Wasserkanne 3 mit einer Leitung 7 für heißes Wasser, die sich ausgehend von dem Rückschlagventil 6 an einen beheizten Kanal in der Abstellplatte 101 und von dort an die Dampfleitung 103 erstreckt. Das Rückschlagventil 6 verhindert einen Wasserrücklauf aus dem Gehäuseteil 1 bzw. aus der Leitung 7 bei abgenommener Wasserkanne 3. Während sich das Rückschlagventil 6 oberhalb des Gehäuseteils 1 in einer Ausnehmung der Platte 2 befindet, sind die Leitung 7 und auch die Dampfleitung 103 im Inneren des Gehäuseteils bzw. des Tragelementes 102 aufgenommen.

In der Wasserkanne 3 ist am Boden ein elektrisches Heizelement 8 vorgesehen, und zwar zusammen mit einem Temperaturregler 9. Über eine Stecker-Buchsen-Verbindung ist die Serienschaltung aus dem Heizelement 8 und dem Temperaturregler 9 mit dem in der Platte 2 untergebrachten Steuerteil oder Schalteinheit 4 verbunden, die den Anschluss an die Spannungsversorgung sowie einen Schalter 401 aufweist. Mit dem Schalter 401 sind u. a. das elektrische Heizelement 8 sowie auch die elektrische Heizung in der Sockelplatte 101 steuerbar, insbesondere sind mit dem Schalter 401 u. a. jeweils individuell die Aufbrühfunktion und die Wasserkochfunktion steuerbar.

Die beheizte Platte 101 dient zum Abstellen des Behälters 12, beispielsweise einer Kanne oder Tasse zur Aufnahme des durch Brühen hergestellten Getränks.

Die Arbeitsweise der Vorrichtung lässt sich wie folgt beschreiben:

Für die Verwendung der Vorrichtung wird die mit kaltem Wasser gefüllte Wasserkanne 3 auf der Platte 2 abgestellt, sodass hierbei über das Ventilelement 5 und das Rückschlagventil 6 eine Flüssigkeitsverbindung zwischen dem Innenraum der Wasserkanne 3 und der Leitung 7 hergestellt wird. Im Anschluss daran wird der Schalter 401 betätigt, und zwar zunächst zum Erhitzen des Wassers in der Wasserkanne 3. Sobald das Wasser in der Wasserkanne 3 aufkocht, wird entweder manuell oder automatisch die elektrische Heizung der Platte 101 aktiviert. Das aufgekochte Wasser fließt dann über die Leitung 7 in die elektrische Heizeinrichtung an der Unterseite der Platte 101 und wird dort nochmals zum Sieden gebracht, sodass hierdurch Wasserdampf entsteht, der durch die Dampfleitung 103 nach oben strömt. Oberhalb des Behälters 12 wird der Dampf soweit abgekühlt, dass das aus dem Dampf sich bildende heiße Wasser schließlich in den Filter 13, beispielsweise in den Kaffeefilter fließt, der dann durch den Filter hindurch in den Behälter 12 gelangt. Der Aufbrühvorgang wird beispielsweise dadurch beendet, dass das gesamte Wasser in der Wasserkanne 3 aufgebraucht ist, oder durch Abschalten des Gerätes.

Wird lediglich heißes, gekochtes Wasser für andere Zwecke benötigt, so kann die Wasserkanne 3 nach dem Aufkochen des Wassers abgenommen werden. Für diese reine Wasserkocherfunktion wird die Heizeinrichtung in der Platte 101 nicht aktiviert, sodass auch kein über die Dampfleitung 103 nach oben strömender Wasserdampf erzeugt wird.

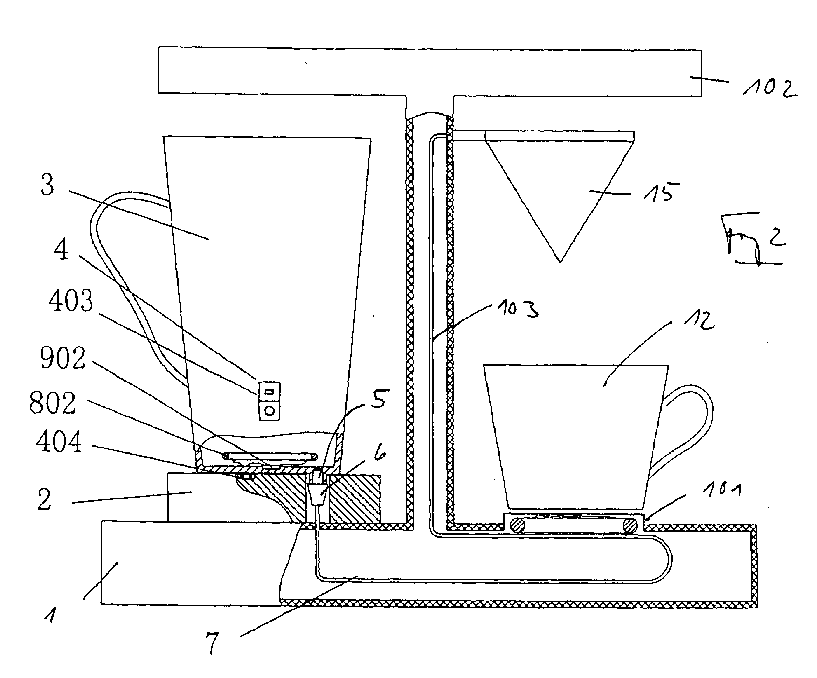

Die Figur 2 zeigt eine abgewandelte Ausführungsform. Bei dieser Ausführungsform ist die elektrische Steuereinheit an der Wasserkanne 3 vorgesehen, in der ein Heizelement 802 und ein Temperaturregler 902 vorgesehen sind. Die Schalteinheit besteht bei dieser Ausführungsform aus einem an der Wasserkanne 3 angebrachten Schalter 403, die mit dem Heizelement 802 und dem Temperaturregler 902 in Serie liegt. Der elektrische Anschluss nach Außen erfolgt über eine Stecker-Buchsen-Verbindung 404.

Die Erfindung wurde voranstehend an Ausführungsbeispielen beschrieben. Es versteht sich, dass zahlreiche Änderungen sowie Abwandlungen möglich sind, ohne das dadurch der der Erfindung zugrunde liegende Erfindungsgedanke verlassen wird.

## Patentansprüche

1. Gerät zur Zubereitung von Getränken durch Aufbrühen, insbesondere Kaffeemaschine mit Wasserkocherfunktion, mit einem Gehäuseteil, auf dem eine Abstellfläche oder-platte (101) zum Abstellen eines Gefäßes zur Aufnahme des Getränks vorgesehen ist, sowie mit wenigstens einem Tragelement (102) für eine an dem Filter oberhalb der Platte (101) führenden Dampfleitung (103), **gekennzeichnet durch** eine Standfläche (2) am Gehäuseteil (1) zum Abstellen einer mit einer elektrischen Heizung (8) versehenen und über eine Schalteinheit (4) steuerbare Wasserkanne (3), wobei der Boden der Wasserkanne ein wasserführendes Kupplungs- und Verbindungselement oder Ventilelement (5) aufweist, welches mit einem an der Standfläche für die Kanne vorgesehenen geräteseitigen Kupplungs- und Verbindungselement oder Rücklaufventil (6) verbindbar ist, welches seinerseits über eine Leitung (7) für flüssiges Heißwasser mit der wenigstens einen Dampfleitung (103) bzw. mit der elektrischen Heizeinrichtung der Abstellfläche oder -platte für das Gefäß (12) in Verbindung steht.

2. Gerät nach Anspruch 1, **dadurch gekennzeichnet, dass** sich das geräteseitige Kupplungselement oberhalb der Ebene der Oberseite des Gehäuseteils (1) befindet, und dass die Leitung für das heiße Wasser sowie die wenigstens eine Dampfleitung (103) im Gehäuse aufgenommen sind.

3. Gerät nach Anspruch 1 oder 2, **dadurch gekennzeichnet, dass** im oder in der Nähe des Bodens der Wasserkanne (3) ein Heizelement (8) vorgesehen ist, und dass das Heizelement sowie eventuell ein Temperaturregler(9) in einem eine Stecker-Buchsen-Verbindung aufweisenden elektrischen Schaltkreis vorgesehen sind.

4. Gerät nach einem der vorhergehenden Ansprüche, **dadurch gekennzeichnet, dass** der Schaltkreis (4) wenigstens einen Schalter (401) aufweist.

5. Gerät nach einem der vorhergehenden Ansprüche, **dadurch gekennzeichnet, dass** der wenigstens eine Schalter (401), die Buchsen-Stecker-Verbindung, dass Heizelement sowie der Temperaturregler (9) in Serie angeordnet sind.

6. Gerät nach einem der vorhergehenden Ansprüche, **dadurch gekennzeichnet, dass** der wenigstens eine Schalter (401) an dem Gehäuseteil (1) oder an einem an diesem Gehäuseteil vorgesehenen weiteren Platte angebracht ist, die die Standfläche für die Wasserkanne (3) bildet.

7. Gerät nach einem der vorhergehenden Ansprüche, **dadurch gekennzeichnet, dass** der wenigstens eine Schalter (401) an der Wasserkanne (3) vorgesehen ist.
